# EUROPÄISCHE PATENTANMELDUNG

(11) **EP 1 887 594 A2**
(43) Veröffentlichungstag der Anmeldung: **13.02.2008**
(21) Anmeldenummer: 07113871.3
(22) Anmeldetag: 06.08.2007
(51) Int. Cl.: H01H 1/20, H01H 73/04

(54) **Antrieb für einen elektromechanischen Schalter**

(30) Priorität: 09.08.2006 DE 102006037283
(71) Anmelder: SIEMENS AKTIENGESELLSCHAFT, 80333 München (DE)
(72) Erfinder: Haas, Wilfried, 91058 Erlangen (DE); Hartmann, Werner, 91085 Weisendorf (DE); Wabner, Alf, 09648 Mittweida (DE)

(57) **Zusammenfassung**

Für einen elektromechanischen Schalter, der ein Kontaktsystem aus wenigstens einem über einen um eine Achse rotierenden Bewegkontakt und wenigstens einem zugehörigen Festkontakt enthält, soll ein verbesserter Antrieb mit einem Aktor für die Aktivierung des Kontaktsystems geschaffen werden. Erfindungsgemäß sind elektromagnetische Systeme (11, 11' bis 18, 18'; 19, 19' - 22, 22') vorhanden, mit denen die Öffnungs- und Schließzeit sowie die Auftreffgeschwindigkeit der Kontakte (51, 51'; 61, 61') steuerbar und ein geregeltes Ein- und Ausschalten der Kontakte (51, 51'; 61, 61') mit definierten "Geschlossen-" und "Offen"-Haltekräften in insbesondere rotierenden doppelunterbrechenden Kontaktsystemen durchführbar ist.

## Beschreibung

Die Erfindung bezieht sich auf einen Antrieb für einen elektromechanischen Schalter gemäß dem Oberbegriff des Patentanspruches 1.

Leistungsschalter hoher Nennstromstärke (I_{N} > 100 A) haben häufig einen Federantrieb, dessen Speicher mit Hilfe eines Motors mit angekoppelter Getriebeübersetzung gespannt werden kann. Der Einschaltvorgang selbst wird dabei durch eine Entriegelung mit einem ferngesteuerten Aktor eingeleitet, wodurch das Schaltgetriebe und damit verbundene Öffnungs- und Kontaktdruckfedern in die Geschlossen-, d.h. "Ein"-Stellung gebracht werden. Die Energie des Federspeichers wird dabei in Bewegungsenergie der Schaltstücke und potentielle Energie der gespannten Öffnungs- und Kontaktdruckfedern umgewandelt.

Die zum Ausschalten bzw. Kontaktöffnen erforderliche Entklinkung der Kontaktdruck- und Öffnungsfedern erfolgt ebenfalls durch einen ferngesteuerten Aktor. Bei Ausfall der Steuerspannung bleibt der Schalter im eingeschalteten Zustand und eine Notausschaltung von Hand ist problemlos möglich.

Neben Federantrieben werden in der Praxis häufig auch bistabile Aktoren verwendet, deren Haltekräfte in der "Ein" - und "Aus"-Stellung von Permanentmagneten aufgebracht werden. Bei Ausfall der Versorgungsspannung für den Antrieb bleibt der Schalter im eingeschalteten Zustand und eine Notausschaltung von Hand ist nur mit Hilfe einer Abschaltmechanik möglich.

Fernbetätigte Leistungsschalter mit Nennstromstärken IN > 100 A, insbesondere Abzweigschalter, können einen Aktor besitzen, der ähnlich wie die bei Schützen verwendeten Antriebe ausgelegt ist. Durch Einsatz von Permanentmagneten und entsprechender Auslegung der Öffnungs- und Kontaktdruckfedern kann die "Ein"-Stellung des Schalters bei Ausfall der Versorgungsspannung für den Antrieb mit reduzierter Haltekraft beibehalten werden.

Der Antrieb der eingangs genannten Art soll insbesondere, aber nicht ausschließlich für rotierende doppelunterbrechende Kontaktsysteme verwendet werden, wie sie beispielsweise in der US 6 259 048 A beschrieben werden.

Bei Verwendung speziell von Doppeltrennstrecken kann sich bekanntermaßen das Grenzschaltvermögen, insbesondere das Grenzschaltvermögen von Niederspannungs-Leistungsschaltern, bei höheren Netzspannungen erheblich steigern. Da über rotierende Doppelkontakte - im Gegensatz zu Brückenanordnungen - ähnlich den in Schützen in der Praxis kaum Erfahrungen vorliegen, sind neuere Entwicklungen auf derartige rotierende, insbesondere doppelunterbrechende Kontaktsysteme gerichtet. Prinzipiell gelten die gleichen technologischen Randbedingungen aber auch bei einfachunterbrechenden Kontaktsystemen.

Aufgabe der Erfindung ist es daher, einen neuen Schalterantrieb, insbesondere einen Antrieb für rotierende doppelunterbrechende Kontaktsysteme, vorzuschlagen.

Die Aufgabe ist erfindungsgemäß bei einem Antrieb der eingangs genannten Art durch die Merkmale des Patentanspruches 1 gelöst. Weiterbildungen sind in den Unteransprüchen angegeben.

Gegenstand der Erfindung ist ein elektromagnetischer Schaltantrieb mit Magnetsystemen nach Art eines Reluktanz-Schrittmotors. Durch einen geeigneten Aufbau der Magnetsysteme wird dabei erreicht, dass diese
- in der Phase der Kontaktbewegung wie ein Schrittmotor wirken und somit eine relativ konstante Schließkraft aufweisen,
- in der Geschlossen-Stellung eine hohe Haltekraft aufweisen, aber mit dem geringen Haltestrom eines Schützsystems auskommen,
- in der in "Offen"-Stellung entweder durch die Öffnungsfedern des Kontaktsystems oder durch Permanentmagnete gehalten werden, und bei dem
- ein Rotor-Weg im Bereich von 30°< ϕ < 120° realisiert werden kann, wobei die Zahl der für die Bewegung verantwortlichen Pole 2p im Bereich 2 < 2p ≤ 16 liegt.

Die Erfindung ist besonders vorteilhaft für rotierende doppelunterbrechende Kontaktsysteme geeignet. Sie ist aber auch bei einfachunterbrechenden Schaltsystemen anwendbar.

Weitere Einzelheiten und Vorteile der Erfindung ergeben sich durch die nachfolgenden Ausführungsbeispiele anhand der Zeichnung in Verbindung mit den Patentansprüchen.

Es zeigen
- Figur 1: in grobschematischer Darstellung ein Schaltgerät mit einem zugehörigen Antrieb,
- Figur 2: eine erste Anordnung einer Schaltgerätemechanik mit Doppelkontakt sowie Kontaktkraftfedern,
- Figur 3: eine zweite Anordnung einer Schaltgerätemechanik mit Doppelkontakt sowie Kontaktkraftfedern und Kontaktöffnungsfedern,
- Figur 4: einen Schaltantrieb mit Permanentmagneten zur Fixierung der "Aus"-Stellung,
- Figur 5: einen zu Figur 4 alternativen Schaltantrieb mit Kontaktdruckfedern und Öffnungsfedern zur Fixierung der "Aus"-Stellung und
- Figur 6: einen weiteren alternativen Schaltantrieb mit Öffnungs- und Kontaktdruckfedern zur Fixierung der "Aus"-Stellung und mit einem Permanentmagneten für eine reduzierte Haltekraft.

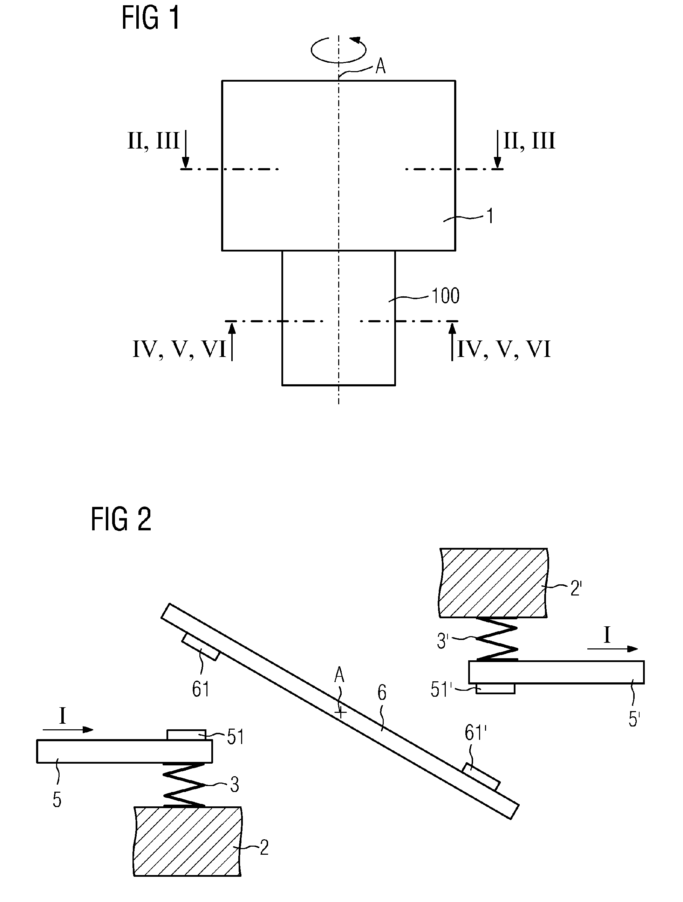

In Figur 1 ist als Blockschaltbild ein Schaltgerät 1 dargestellt, das ein um die Drehachse I rotierbares, doppelunterbrechendes Kontaktsystem beinhaltet. Das Kontaktsystem ist in Figur 1 nicht im Einzelnen dargestellt. Zur Generierung der Drehbewegung sind am Schaltgerät 1 ein oder zwei Schaltantriebe angebracht, beispielsweise der Schaltantrieb 100, auf den weiter unten noch im Einzelnen eingegangen wird.

In Figur 1 ist der Schalterantrieb 100 unter dem Schaltgerät 1 zur Aktivierung des Kontaktsystems zwecks Drehung um die Achse I angebracht. Ein oder zwei Antriebe können auch seitlich vor und/oder hinter dem Schaltgerät 1 angeordnet sein, wobei in diesem Fall die Aktivierung der Kontaktbewegung über ein Gestänge, Zahnriemen od. dgl. erfolgt.

Das Schaltgerät 100 gemäß Figur 1 enthält als Aktor elektromagnetische Systeme, wozu ein feststehendes Joch und ein beweglicher Drehanker notwendig sind. Bei solchen elektromagnetischen Systemen ist die Kraftwirkung zwischen dem feststehenden Joch und dem beweglichen Anker von dessen Ort abhängig. Mit kleiner werdendem Luftspalt s zwischen den beiden Komponenten (Joch und Anker) nimmt die Kraft etwa gemäß 1/s zu.

Eine entsprechend 1/s starke Ortsabhängigkeit des Antriebes lässt sich durch den Einsatz von Reluktanz- oder Hybrid-Schrittmotoren, deren Wirkungsweise allein auf dem Influenzprinzip beruht, vermeiden. Wegen der vom Kontaktsystem herrührenden Anforderungen an die Größe der Kontaktkraft ist der Einsatz kommerzieller Motoren als Antrieb allerdings zu teuer und für den bestimmungsgemäßen Zweck auch nicht notwendig.

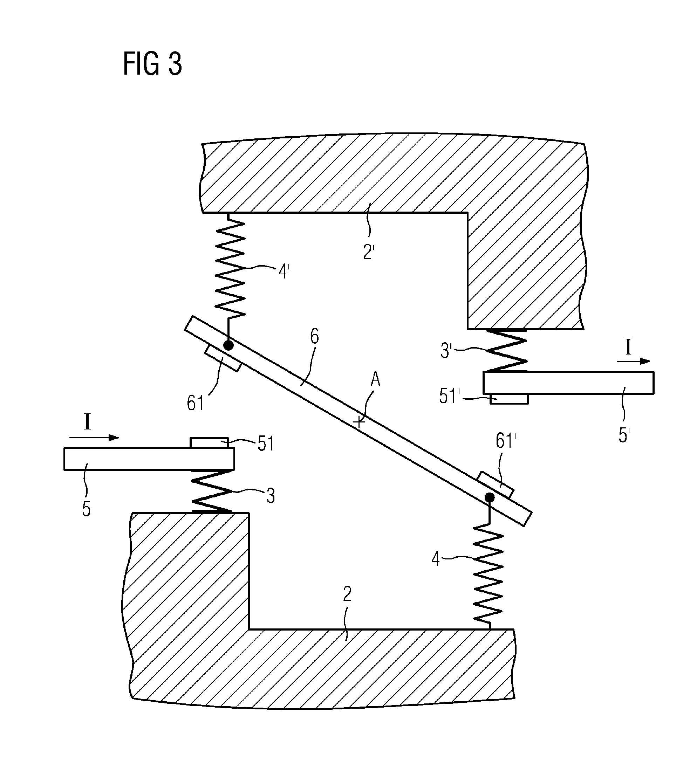

Anhand der Figuren 2 und 3 wird zunächst der prinzipielle Aufbau des rotierenden Schaltsystems verdeutlicht, wobei Figur 2 eine Anordnung mit Kontaktkraftfedern, aber ohne Kontaktöffnungsfedern und Figur 3 eine Anordnung mit Kontaktkraftfedern und Kontaktöffnungsfedern darstellt. Beide Figuren ergeben sich als Draufsicht entlang der Schnittlinien II-II bzw. III-III in Figur 1 und werden nachfolgend im Wesentlichen gemeinsam beschrieben.

In den Figuren 2 und 3 bedeuten 2 einen Rahmen des Schaltgerätes, der als Halterungselemente 2 bzw. 2' für den Ortsbezug der Kontakte wesentlich ist. Über erste Federn 3, 3' sind die Festkontaktträger 5 bzw. 5', welche die Festkontakte 51 bzw. 51' tragen, mit dem Rahmen 2 bzw. 2' gekoppelt. Bezugszeichen 6 definiert einen Bewegkontaktträger, der um die Drehachse I aus Figur 1 rotierbar ist und an seinen den Festkontakten zugewandten Endseiten jeweils Bewegkontaktstücke 61 bzw. 61' trägt.

Speziell in Figur 3 ist der Bewegkontaktträger 6 mit beiden den Bewegkontakten 61 bzw. 61' gegenüber liegenden Enden mittels zweiter Federn 4 bzw. 4' jeweils mit den Rahmen 2 gekoppelt. Damit wirken die ersten Federn 3 bzw. 3' als Kontaktkraftfedern und die zweiten Federn 4 bzw. 4' jeweils als Kontaktöffnungsfedern.

In bekannter Weise bestehen die Kontaktträger 5, 5' und 6 aus Kupfermaterial, während die eigentlichen Kontakte, d.h. sowohl die Festkontakte 51, 51' als auch die Bewegkontakte 61, 61', aus spezifischem Kontaktmaterial gebildet sind. Auf das Kontaktmaterial wird in diesem Zusammenhang nicht eingegangen.

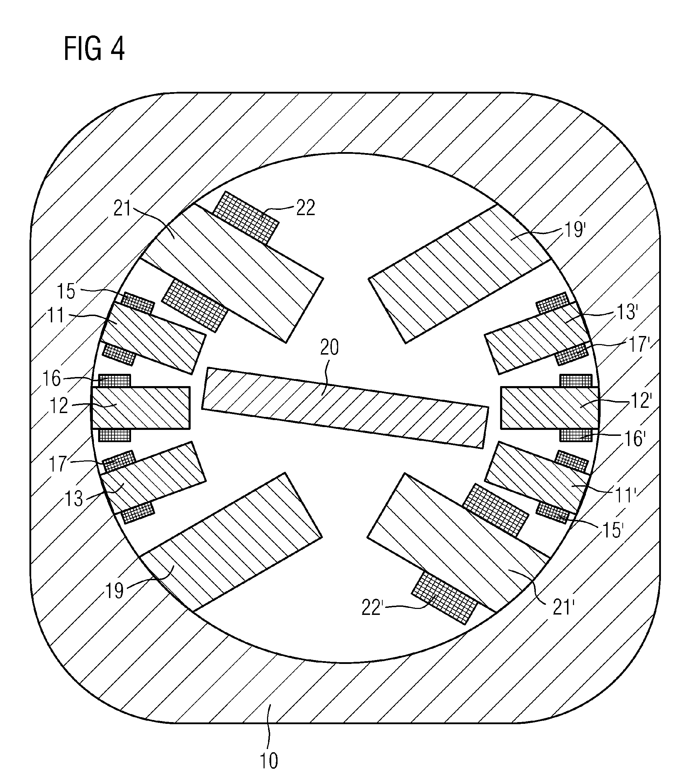

Die Kontaktsysteme gemäß den Figuren 2 und 3 werden durch aus elektromagnetischen Systemen bestehende Aktoren betrieben, die an die Drehachse gekoppelt sind, was anhand der Figuren 4 bis 6 im Einzelnen beschrieben wird. Die Figuren 4 bis 6 ergeben sich als Draufsicht entlang der Schnittlinien IV-IV, V-V bzw. VI-VI in Figur 1 und beinhalten jeweils Alternativen für den Aufbau der elektromagnetischen Systeme als Aktoren für das jeweilige Kontaktsystem.

Gemeinsam ist in den Figuren 4 bis 6 jeweils ein Stator 10 und ein Rotor 20 zur Realisierung des elektromagnetischen Antriebes vorhanden. Die Pole bzw. Spulen für die Rotoraktivierung bzw. Rotorfixierung sind jeweils problemangepasst für die Alternativen der Figuren 2 und 3 ausgebildet. Im Einzelnen kennzeichnen dabei Bezugszeichen 11 bis 14 bzw. 11' bis 14' Magnetpole für die Rotorbewegung, 15 bis 18 bzw. 15' bis 15' Wicklungen für Bewegungspole 11 bis 14 bzw. 11' bis 14', Bezugszeichen 19 bzw. 19' einen Haltepol für Schaltgerätestellung "Aus" und Bezugszeichen 21 mit zugehöriger Spule 22 einen Haltepol für Schaltgerätestellung "Ein".

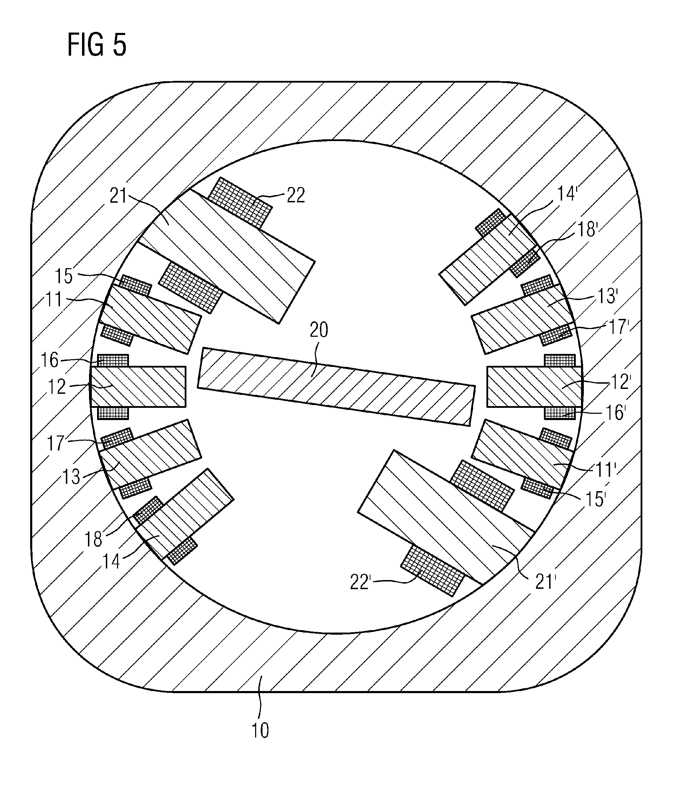

Der Rotor 20 der in Figur 4 dargestellten Anordnung hat 2p = 6 Pole, die in Verbindung mit dem Kontaktsystem gemäß Figur 2 genutzt werden. Dabei wird der Rotor in der "Offen"("Aus")-Stellung des Schalters 1 durch einen Permanentmagneten 19 fixiert, wodurch das Kontaktsystem keine Öffnungsfedern benötigt. Bei der in Figur 5 dargestellten Anordnung, die in Verbindung mit dem Kontaktsystem gemäß Figur 3 verwendet wird, ist die "Offen"-Stellung der Kontakte bzw. die entsprechende Stellung des Rotors 20 durch die Kontaktöffnungsfedern 4, 4' im Schaltgerät 1 aus Figur 2 gewährleistet.

Letzterer Aufbau besitzt dadurch dieselben kinematischen Eigenschaften wie die Anordnung gemäß Figur 4, wobei der Ausschaltvorgang durch die Kontaktöffnungsfedern 4, 4' unterstützt wird.

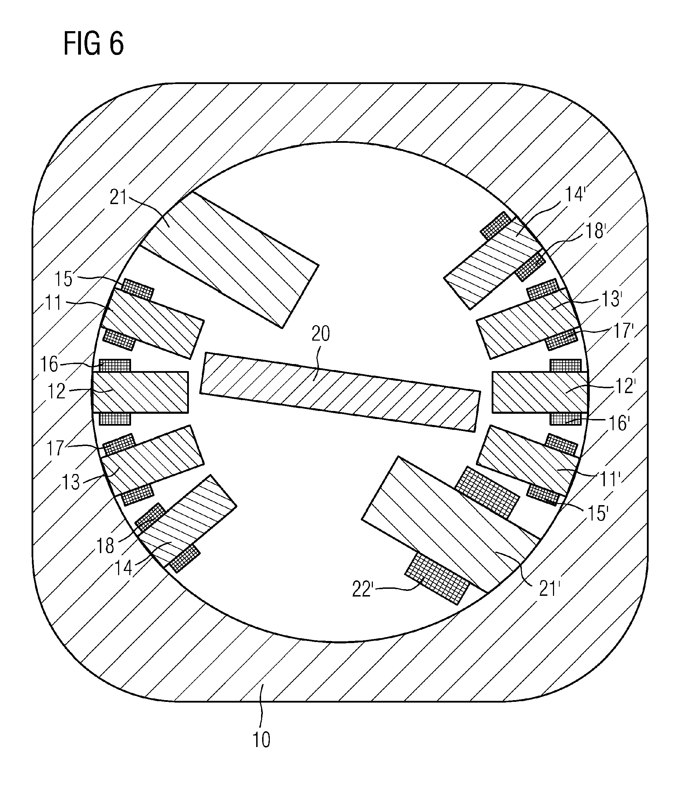

Mit der Anordnung gemäß Figur 6 und dem dort gezeigten Aktoren kann bei geeigneter Auslegung der Öffnungs- und Kontaktdruckfedern die Geschlossen("Ein")-Stellung des Schalters 1 bzw. Rotors 20 bei Ausfall der Versorgungsspannung für den Antrieb mit reduzierter Haltekraft durch einen Permanentmagneten 19 beibehalten werden. Der Öffnungsvorgang des Kontaktsystems verläuft entsprechend wie bei den Anordnungen gemäß Figur 4 und 5.

Speziell der Einschaltvorgang des Kontaktsystems wird durch die aufeinander folgende Erregung der Spulen 11 bis 13 (14) und 11' bis 13'(14') sowie gegebenenfalls 14 und 14' für jeweils ein Zeitintervall Δt₁₁, Δt₁₂, Δt₁₃ und gegebenenfalls Δt₁₄ eingeleitet und schließlich mit dem Zuschalten der Haltespulen 22 bzw. gegebenenfalls 22' abgeschlossen. Dabei beinhalten die Indices bei den Zeitintervallen Δtᵢₖ jeweils die Zuordnung zu den entsprechenden Aktoren.

Durch die Länge und Überlappung der Zeitintervalle, der in diesen Zeitintervallen wirkenden Stromverläufe und durch die Ausnutzung der Trägheit des Rotor-Kontakt-Systems gemäß den Figuren 2/3 sowie den Figuren 4 bis 6 kann die Schließdauer des Antriebes gesteuert werden. Dadurch ist es weiterhin möglich, die Auftreffgeschwindigkeit der beweglichen Kontakte zu regeln und damit ein Prellen auszuschließen. Insbesondere kann bei Bedarf durch gegenläufig gepolte und zeitlich entsprechend gestaffelte Magnetfelder in den zuletzt angesteuerten Polen der Bewegkontakt abgebremst werden, was zu einem besonders vorteilhaften Verhalten in Bezug auf das Kontaktprellen und damit auch auf die Lebensdauer der Kontakte führt.

Das wahlweise Erzeugen gleich- und gegenläufig gepolter Magnetfelder kann in einfacher und bekannter Weise durch Aussteuerung über eine Vollbrücke erfolgen. Gegebenenfalls ist auch eine andere zeitliche Abfolge bei stetig beschleunigender Ansteuerung möglich.

Bei den vorstehend beschriebenen Anordnungen muss beachtet werden, dass die von Kontaktdruck- und/oder Öffnungsfedern ausgeübten Kräfte während des gesamten Schließvorganges, oder aber auch nur in seiner Schlussphase wirken können. Zur Regelung dieser Abläufe wird eine elektronische Ablaufsteuerung mit entsprechenden Treiberstufen notwendig. Je nach Schalthäufigkeit der entsprechenden Schaltgeräte können dabei die für die Bewegung verantwortlichen Spulen der Starter mit einem mehr oder weniger großen Überstrom betrieben werden.

Beim Öffnen des Kontaktsystems wird zunächst der Strom der Haltespulen ausgeschaltet und anschließend die Bewegung der Kontakte ähnlich wie beim Schließen durch die aufeinander folgende kurzzeitige Ansteuerung der Spulen 15 und 15', 16 und 16', 17 und 17' sowie gegebenenfalls 18 und 18' initiiert. Die Kontaktdruck- und Öffnungsfedern 3, 3' sowie 4, 4' aus den Figuren 2 und 3 unterstützen dabei den Bewegungsvorgang. Die Kraftwirkung kann dabei so groß sein, dass eine Unterstützung durch die von den Polen hervorgerufenen Magnetkräfte beim Abschalten nicht notwendig ist. Dadurch kann die Ansteuereinheit vereinfacht werden, ebenso durch den Verzicht auf ein sehr schnelles und/oder sanftes Kontaktschließen.

Die Erfindung wurde vorstehend an doppelunterbrechenden, um eine Drehachse rotierenden Kontaktsystemen beschrieben. Das Kontaktsystem kann selbstverständlich auch einfach-unterbrechend ausgebildet sein. Zur Aktivierung der Kontaktbewegung können die Magnetsysteme ggf. auch mit Gestängen, Zahnriemen od. dgl. komplettiert werden.

Insgesamt ist bei den Beispielen gemäß den Figuren vorteilhaft, dass in den elektromagnetischen Spulen-/Polsystemen die Kräfte vorgegeben werden können. Durch die zusätzliche Verwendung von Permanentmagneten kann bei Spannungsausfall die "Ein"-Stellung vorgegeben werden. Insbesondere bei Kombination eines Permanentmagneten mit einem elektromagnetischen Magnetsystem kann die Haltekraft so vorgegeben werden, dass sie ggf. manuell aufhebbar ist.

## Patentansprüche

1. Antrieb für einen elektromechanischen Schalter, der ein System aus wenigstens einem, an einem um eine Achse rotierbaren Hebel angebrachten Bewegkontakt und einem, dem Bewegkontakt zugeordnete Festkontakt enthält, mit einem Aktor zur Aktivierung des Kontaktsystems durch Bewegung des wenigstens einen Bewegkontaktes zur alternativen "Geschlossen" - oder "Offen"-Stellung des Kontaktsystems, wobei der Aktor zwecks Entriegelung des Schalters fernsteuerbar ist, **dadurch gekennzeichnet, dass** der Aktor aus elektromagnetischen Systemen zum Bewegen(Pole 11, 11' - 14, 14';Spulen 15, 15' - 18, 18') und Fixieren (Pole 19,19' und 21,21'; Spulen 22,22')des Rotors 20 besteht, mit denen die Öffnungs- und Schließzeit sowie die Auftreffgeschwindigkeit der Kontakte (51, 51', 61, 61') derart steuerbar ist, dass ein geregeltes Ein- und Ausschalten des Kontaktsystems mit den Schaltkontakten (51, 51', 61, 61') durchführbar ist und auch eine definierte Offenhaltekraft und Kontaktdruckkraft aufgebracht werden kann.

2. Schalterantrieb nach Anspruch 1, **dadurch gekennzeichnet, dass** als Kontaktsystem wenigstens zwei, über einen um eine Achse rotierbaren Hebel gekoppelte Bewegkontakte vorhanden sind, denen jeweils ein Festkontakt zugeordnet ist, so dass ein doppelunterbrechendes System gebildet wird.

3. Schalterantrieb nach Anspruch 1 oder Anspruch 2, **dadurch gekennzeichnet, dass** von den Magnetsystemen (11, 11' - 18, 18'; 19, 19'; 21, 21' und 22, 22') die ersten (11, 11' - 18, 18') in der Phase der Kontaktbewegung wie ein Schrittmotor wirken und damit eine relativ konstante Schließkraft wirkt.

4. Schalterantrieb nach Anspruch 3, **dadurch gekennzeichnet, dass** das Kontaktsystem durch die Magnetsysteme (21,21' und 22, 22') in der "Geschlossen"-Stellung wegen der Schütz ähnlichen Anordnung eine hohe Kontaktdruckkraft aufweist.

5. Schalterantrieb nach Anspruch 3, **dadurch gekennzeichnet, dass** das Kontaktsystem in der "Offen"-Stellung entweder durch die Öffnungsfedern des Kontaktsystems (5, 51, 51', 6, 61, 61') oder durch separate Permanentmagnete (19, 19') gehalten wird.

6. Schalterantrieb nach einem der Ansprüche 3 bis 5, **dadurch gekennzeichnet, dass** durch die Magnetsysteme (11, 11' - 18, 18') ein Rotor-Weg im Bereich 30°< ϕ < 120° realisierbar ist.

7. Schalterantrieb nach Anspruch 6, **dadurch gekennzeichnet, dass** die Zahl der für die Bewegung verantwortlichen Statorpole (11,11'- 15, 15') im Bereich 2 ≤ 2p ≤ 16 liegt.

8. Schalterantrieb nach einem der vorangehenden Ansprüche, **gekennzeichnet durch** den Einsatz zur Aktivierung eines Drehkontaktes (6, 61, 61'), wobei der Brückenkontakt (6, 61, 61') über Kontaktöffnungsfedern (4, 4') mit dem Schaltergehäuse (2) gekoppelt ist. (sollte man Streichen)

9. Schalterantrieb nach einem der Ansprüche 1 bis 8, **dadurch gekennzeichnet, dass** die Festkontakte (51, 51') auf Kontaktträgern (5, 5') befestigt sind, wobei die Kontaktträger (5, 5') über Kontaktkraftfedern (3, 3') mit dem Schaltergehäuse (2) gekoppelt sind. (sollte man Streichen)

10. Schalterantrieb nach einem der vorhergehenden Ansprüche, **dadurch gekennzeichnet, dass** die Bewegkontakte (61, 61') auf einem Kontaktträger (6) befestigt sind, wobei der Bewegkontaktträger über Kontaktöffnungsfedern (4, 4') mit dem Schaltergehäuse (2) gekoppelt ist. (sollte man Streichen)

11. Schalterantrieb nach einem der Ansprüche 1 bis 7, **dadurch gekennzeichnet, dass** durch geeignete Ansteuerung der Magnetsysteme (11, 11' - 18, 18') ein Prellen der Kontakte (51, 51', 6, 61, 61') beim Schalten des Kontaktsystems (5, 5', 51, 51', 6, 61, 61') verhindert wird

12. Schalterantrieb nach einem der Ansprüche 1 bis 7, **dadurch gekennzeichnet, dass** die Magnetsysteme (11, 11' - 18, 18') aus einem Magnetpol (11, 11' - 14, 14') und wenigstens einer zugehöriger Spulenwicklung (15, 15' - 18, 18') bestehen. (sollte man Streichen)

13. Schalterantrieb nach einem der Ansprüche 1 bis 7, **dadurch gekennzeichnet, dass** von den Magnetsystemen (11, 11' - 18, 18'; 19, 19' - 22, 22') wenigstens ein Magnetsystem (21, 21'; 22,22')durch Verwendung eines Permanentmagneten als Haltepol für "Ein" ausgebildet ist.

14. Schalterantrieb nach einem der Ansprüche 1 bis 7, **dadurch gekennzeichnet, dass** von den Magnetsystemen (11, 11' - 18, 18'; 19, 19' - 22, 22') wenigstens ein weiteres Magnetsystem durch Verwendung eines Permanentmagneten (19,19') als Haltepol für "Aus" ausgebildet ist.
